# EUROPEAN PATENT SPECIFICATION

(11) **EP 0 506 247 B1**
(45) Date of publication and mention of the grant of the patent: **10.05.1995**
(21) Application number: 92301967.3
(22) Date of filing: 09.03.1992
(51) Int. Cl.: B01J 20/26, C08F 2/40, C08F 212/00

(54) **Method of preparing surface-porous crosslinked copolymer beads**
Verfahren zur Herstellung von vernetzten Copolymerperlen mit poröser Oberfläche
Méthode de préparation de copolymère réticulé poreux en surface

(30) Priority: 22.03.1991 JP 58794/91
(43) Date of publication of application: 30.09.1992
(73) Proprietor: ROHM AND HAAS COMPANY, Philadelphia Pennsylvania 19105 (US)
(72) Inventor: Yamashita, Sei-ichi, Abiko-City, Chiba-Prefecture (JP); Yagishashi, Tateo, Urawa-City, Saitama-Perfecture (JP); Higosaki, Nobuyuki, Kiyose-City, Tokyo (JP)
(74) Representative: Tanner, James Percival

(56) References cited:
- EP-A- 0 101 943
- GB-A- 1 116 800
- GB-A- 1 416 405
- US-A- 4 375 519
- WORLD PATENTS INDEX Derwent Publications Ltd., London, GB; AN 76-62173X

## Description

The present invention is concerned with a method of preparing crosslinked copolymer beads. More particularly, the present invention is concerned with a method of preparing surface-porous crosslinked copolymer beads by suspension-polymerizing, in the aqueous medium of the polymerization system, one or more monovinyl monomers and one or more polyvinyl monomers in the presence of a water-soluble polymerization inhibitor.

Heretofore, crosslinked copolymer beads consisting of monovinyl monomers and polyvinyl monomers have been produced by suspension polymerization in an aqueous medium in the presence of a polymerization initiator. These beads have been widely used as intermediates for ion exchange resins, chelate resins, supports, adsorbents, for example.

Crosslinked copolymer beads consisting of monovinyl monomers and polyvinyl monomers, specifically, styrene and divinylbenzene, have a three-dimensional network structure. This network structure is classified according to its internal structure into two types: gel and porous structures.

In crosslinked copolymer beads of gel structure, the so-called "gel phase" forms the entire bead, which is almost homogeneous and essentially devoid of pores. The bead appearance is transparent and the specific surface area is around 0-0.3 m² /g.

On the other hand, porous, crosslinked copolymer beads are produced by special polymerization methods. Inside these beads a discontinuous polymer phase is formed, with pores extending among the regions of the polymer phase. The diameters of these pores fall largely within the range of 5 to 5000 nanometers (nm). These porous, crosslinked copolymer beads may be prepared by allowing a third component, such as an organic solvent, a linear polymer or a mixture thereof, to coexist in the polymerization system at the time of suspension polymerization. Since these copolymer beads have internal pores, their specific surface area is large, frequently several hundred square meters per gram..

Depending on the methods by which they are prepared, beads may have various specific surface areas, pore volumes or pore distributions. Such beads have widely been used as synthetic adsorbents or supports.

In some applications of porous crosslinked copolymer beads as mentioned above, only the bead surface is used, for example, in supporting an enzyme. In this case, however, a disadvantage of the use of porous crosslinked copolymer beads is that the chemical fluid used would permeate the beads unnecessarily and this would make it difficult to effectively utilize the chemical fluid. It would, therefore, be desirable if this disadvantage could be overcome.

EP-A-0101943 discloses the production of crosslinked copolymer beads having a core/shell morphology by a process comprising: forming a suspension of a plurality of crosslinked free radical matrices in a continuous phase; and contacting the free radical matrices with a monomer feed under conditions such that the monomer feed is imbibed by the free radical matrices and the free radicals in the free radical matrices catalyse the polymerization of the monomer feed within the free radical matrices. EP-A-0101943 also states that the core of the copolymer beads may have a different porosity than the shell.

The present invention provides a method of preparing crosslinked beads of copolymer by polymerizing monovinyl monomers and polyvinyl monomers, and wherein the beads have a gel or non-porous internal structure and a porous surface structure. The copolymer beads are useful as synthetic adsorbents and as supports.

We have unexpectedly found a method of preparing surface-porous crosslinked copolymer beads by suspension-polymerizing one or more monovinyl monomers and one or more polyvinyl monomers in an aqueous medium containing a water-soluble polymerization inhibitor.

Monovinyl monomers which are useful in the method of the present invention include monovinyl aromatic monomers such as styrene, methylstyrene, chlorostyrene, chloromethylstyrene, ethylstyrene, vinylxylene, vinyltoluene and vinylnaphthalene; monovinyl aliphatic monomers such as acrylic acid, methacrylic acid, acrylates, methacrylates, acrylonitrile and methacrylonitrile; and monovinyl heterocyclic monomers such as vinylpyridine.

Polyvinyl monomers useful in the method of the present invention include polyvinyl aromatic monomers such as divinylbenzene, divinyltoluene, divinylxylene, divinylnaphthalene, trivinylbenzene, or trivinylxylene, and polyvinyl aliphatic monomers such as ethylene glycol di(meth)acrylate, trimethylolpropane tri(meth)acrylate, butylene glycol di(meth)acrylate, diaryl maleate and diaryl adipate. As these polyvinyl monomers cause crosslinking of the copolymers formed when they are copolymerized with the monovinyl monomers, they are also called crosslinking agents or crosslinking monomers. The amount of the polyvinyl monomer used as a crosslinking agent may be in the range of from 0.5 to 60 percent by weight (wt %), preferably from 1.5 to 50 wt %, based on the total weight of the monomer used.

In the process of this invention, a bead-shaped, crosslinked copolymer is prepared by suspension polymerization for example a conventional method of suspension polymerization in an aqueous medium. However, the polymerization is performed after addition of a water-soluble polymerization inhibitor to the medium, typically with stirring. In the process of preparing a crosslinked copolymer, the operation of adding a water-soluble polymerization inhibitor as described in this invention is a technology that has not been disclosed in the literature. The advantageous effect of adding the polymerization inhibitor is all the more surprising in view of processes that have been disclosed for removal of polymerization inhibitors prior to polymerization, lest they prevent the desired polymerization of the monomer to form the copolymer beads. Water-soluble polymerization inhibitors useful in the present invention include hydroquinone, catechol, *t*-butyl catechol and pyrogallol. The polymerization inhibitor is preferably used in an amount that would not hinder the progress of the polymerization. The inhibitor may be used in the range of from 0.001 to 10 wt %, preferably from 0.01 to 5 wt %, based on the total weight of the monomers used.

In the polymerization process of the present invention, water is used as the dispersion medium. As a dispersant, a conventional dispersant such as polyvinyl alcohol, sodium poly(meth)acrylate, calcium carbonate, calcium sulfate, carboxymethylcellulose, for example, may be used.

In the polymerization process, a polymerization initiator may be used to drive the polymerization reaction more nearly to completion. Free-radical polymerization initiators known to those skilled in the art are suitable as the polymerization initiator in this process, for example, benzoyl peroxide, *t*-butyl peroxide, lauroyl peroxide, and azo compounds such as azobisisobutyronitrile.

The polymerization temperature to be applied is higher than that necessary to initiate the polymerization, for example, is higher than the decomposition temperature of the polymerization initiator, and is preferably from 60 to 100°C.

The crosslinked copolymer beads thus obtained appear whitish, opaque and spherical, and typically have an average diameter of from 10 micrometers (»m) to 1 millimeter, preferably from 25 »m to 1 millimeter. Scanning electron microscopy of the beads shows that the internal structure of these beads is the same as that of conventional gel resins, but their surfaces have a structure similar to that of convention porous crosslinked resin. In addition, the crosslinked copolymer beads thus obtained possesses a specific surface area consistent with that of a surface-porous structure. The pores do not merely adhere to the surface of the beads, but are part of the bead structure, and without wishing to be bound by theory, we believe that the pores are formed by the upheaval or protuberance of the bead matrix itself. We believe that this porous structure of the surfaces makes the beads appear whitish and opaque.

The crosslinked copolymer beads prepared according to the present invention may be used not only as supports but also as adsorbents and intermediates for ion exchange resins, for example.

The following Examples, in conjunction with the accompanying drawings, are presented to illustrate preferred embodiments of the present invention. All percentages and ratios herein are by weight unless otherwise specified, and all reagents used are of good commercial quality unless otherwise specified.

In the accompanying drawings:-
Figure 1 is a scanning electron photomicrograph, 200x magnification, showing the surface structure of the surface-porous type crosslinked copolymer beads obtained in Example 1, below;
Figure 2 is a scanning electron photomicrograph, 20,000x magnification, showing the internal structure of the surface-porous type crosslinked copolymer beads obtained in Example 1, below;
Figure 3 is a scanning electron photomicrograph, 200x magnification, showing the surface structure of the surface-porous type crosslinked copolymer beads obtained in Example 2, below;
Figure 4 is a scanning electron photomicrograph, 20,000x magnification, showing the internal structure of the surface-porous type crosslinked copolymer beads obtained in Example 2, below;
Figure 5 is a scanning electron photomicrograph, 200x magnification, showing the surface structure of the gel-type crosslinked copolymer beads obtained in Example 3, below; and
Figure 6 is a scanning electron photomicrograph, 20,000x magnification, showing the internal structure of the gel-type crosslinked copolymer beads obtained in Example 3, below.

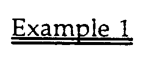

This Example is intended to illustrate the method of the present invention, and styrene-divinylbenzene-methacrylate copolymer beads having surface porosity, produced using this method.

Five grams of *t*-butyl peroxide polymerization initiator were dissolved in a mixed solution of 33.5 g commercial divinylbenzene (58% purity), 386.5 g styrene and 80 g methyl methacrylate. An aqueous polymerization inhibitor solution was prepared by dissolving 1 g hydroquinone in 400 g water and adding to the solution 350 g of 1% aqueous polyvinyl alcohol solution. The monomer mixture was added to the inhibitor solution, and the mixture was stirred continuously, heated to 85°C, and allowed to polymerize for about 6.5 hours. The crosslinked copolymer obtained was filtered with vacuum, then washed twice with water, filtered with vacuum again, and dried with a blow drier at 125°C for 5 hours. The dry copolymer beads were white, opaque and spherical, and had a particle size of 200-800 micrometers and a specific surface area of 1.0 m²/g.

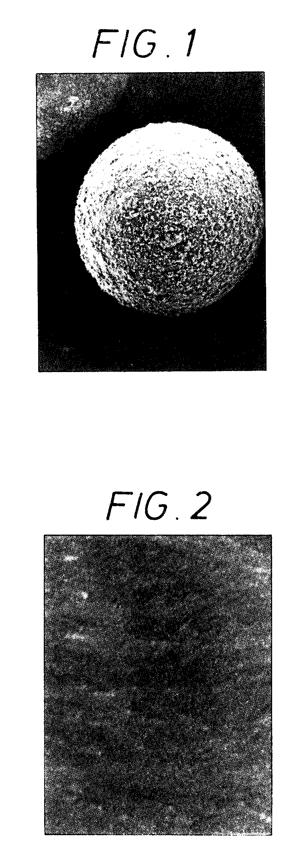

The surface and internal structures of these crosslinked copolymer beads obtained were observed with a scanning electronic microscope (Model JSM-5400LV, manufactured by Nippon Denshi K.K.). The surface and internal structures of the beads are shown in Fig. 1 and 2, respectively. From these photomicrographs, it is clear that the crosslinked copolymer prepared in Example 1 is a gel-type copolymer with a porous structure at the surface and a uniform internal structure.

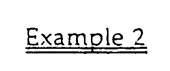

This Example illustrates preparation of another copolymer using the method of the present invention, a surface-porous, styrene-divinylbenzene copolymer in the form of surface-porous beads.

Five grams of *t*-butyl peroxide polymerization initiator were dissolved in a monomer solution of 33.5 g commercial divinylbenzene (58% purity) and 466.5 g styrene. An aqueous polymerization inhibitor solution was prepared by dissolving 1 g hydroquinone in 400 g water and adding to the solution 350 g of 1% aqueous polyvinyl alcohol solution. The monomer mixture was added to the inhibitor solution, and the mixture was stirred continuously, heated to 85°C, and allowed to polymerize for about 6.5 hours. The crosslinked copolymer obtained was filtered with vacuum, washed twice with water, filtered again with vacuum, and dried with a blow dryer at 125°C for 5 hours. The crosslinked copolymer beads obtained were whitish, opaque and spherical, with a particle size of 200-800 micrometers and a specific surface area of 0.4 m²/g.

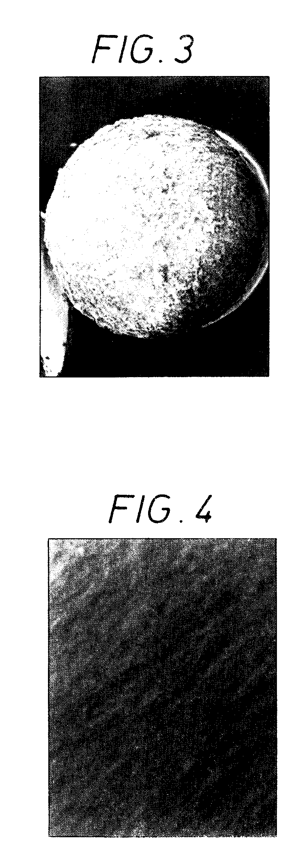

The surface and internal structures of these crosslinked copolymer beads obtained were observed as described in Example 1. The surface and internal structures of the beads are shown in Fig. 3 and Fig. 4 respectively.

From these Figures, it is clear that the crosslinked copolymer beads prepared in Example 2 are gel-type copolymer beads with a porous structure at the surface and a uniform internal structure.

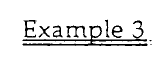

This Example is intended to compare a copolymer of the prior art with the above-exemplified copolymers prepared using the method of the present invention.

Five grams of *t*-butyl peroxide polymerization initiator were dissolved in a monomer solution of 33.5 g commercial divinylbenzene (58% purity), 386.5 g styrene and 80 g methyl methacrylate. An aqueous solution was prepared by adding 350 g of a 1% aqueous polyvinyl alcohol solution to 400 g water, the monomer mixture was added to the aqueous solution, the resulting mixture was stirred continuously, heated to 85°C, and allowed to polymerise for about 6.5 hours. The crosslinked copolymer obtained was filtered with vacuum, washed with water twice, filtered with vacuum again, and dried in a blow dryer at 125°C for 5 hours. The crosslinked copolymer beads were whitish, opaque and spherical, with a particle size of 200-800 micrometers and a specific surface area of 0.01 m²/g.

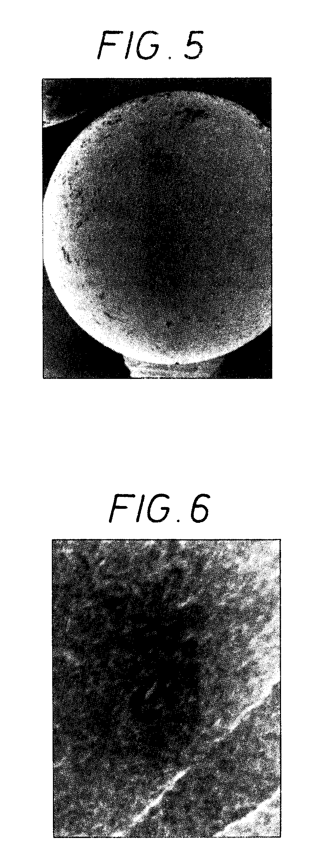

The surface and internal structures of these crosslinked copolymer beads were observed as described in Example 1. The surface and internal structures of the beads are shown in Fig. 5 and Fig. 6 respectively. The surface of the crosslinked copolymer obtained shows a non-porous structure.

The above Examples clearly demonstrate that the crosslinked copolymer beads obtained by the method of this invention retain a convention gel-type structure in the inside, while possessing on their surface a structure similar to that of conventional, porous, crosslinked resins. The surface of the beads is a protuberance of the bead matrix itself, that is, the porous surface is not merely an adherence to the surface. Therefore, they may be used as a carrier for supporting useful materials without trapping excessive liquid within internal pores. These copolymer beads may be used not only as supports but also as adsorbents and as intermediates for ion exchange resins, for example.

## Claims

1. A method of preparing crosslinked gel copolymer beads having a gel internal structure and a porous surface, which method is characterized by suspension-polymerizing at least one monovinyl monomer and at least one polyvinyl monomer in an aqueous medium containing a water-soluble polymerization inhibitor.

2. A method as claimed in claim 1, wherein the polymerization inhibitor is added to the polymerization system at an amount from 0.001 to 10 weight percent, based upon the total weight of monomers used.

3. A method as claimed in claim 2, wherein the polymerization inhibitor is added to the polymerization system at an amount from 0.01 to 5 weight percent, based upon the total weight of monomers used.

4. A method as claimed in any of claims 1 to 3, wherein the polymerization inhibitor is selected from hydroquinone, catechol, t-butyl catechol and pyrogallol.

5. A method as claimed in any of claims 1 to 4, wherein the polyvinyl monomer(s) is present in the polymerization system in an amount from 0.5 to 60 weight percent, based on the total weight of the monomers.

6. A method as claimed in claim 5, wherein the polyvinyl monomer is present in the polymerization system in an amount from 1.5 to 50 weight percent, based on the total weight of the monomers.

7. A method as claimed in any of claims 1 to 6, wherein the crosslinked beads have an average diameter of from 10 micrometers to 1 millimeter.

8. Use of crosslinked copolymer beads prepared by a method as claimed in any of claims 1 to 7, as an adsorbent, a support, or as an intermediate in the production of ion exchange resins.

## Patentansprüche

1. Verfahren zur Herstellung vernetzter Gel-Copolymerperlen mit einer Gel-Innenstruktur und einer porösen Oberfläche, welches Verfahren gekennzeichnet ist durch Suspensionspolymerisieren von mindestens einem Monovinylmonomer und mindestens einem Polyvinylmonomer in einen, wäßrigen Medium, welches einen wasserlöslichen Polymerisationsinhibitor enthält.

2. Verfahren, wie in Anspruch 1 beansprucht, in welchem der Polymerisationsinhibitor dem Polymerisationssystem in einer Menge von 0,001 bis 10 Gewichtsprozent, bezogen auf das Gesamtgewicht der verwendeten Monomere, zugegeben wird.

3. Verfahren, wie in Anspruch 2 beansprucht, in welchem der Polymerisationsinhibitor dem Polymerisationssystem in einer Menge von 0,01 bis 5 Gewichtsprozent, bezogen auf das Gesamtgewicht der verwendeten Monomere, zugegeben wird.

4. Verfahren, wie in einem der Ansprüche 1 bis 3 beansprucht, in welchem der Polymerisationsinhibitor aus Hydroquinon, Brenzkatechin, tert. Butylbrenzkatechin und Pyrogallol gewählt wird.

5. Verfahren, wie in einem der Ansprüche 1 bis 4 beansprucht, in welchem das (die) Polyvinylmonomer(e) im Polymerisationssystem in einer Menge von 0,5 bis 60 Gewichtsprozent, bezogen auf das Gesamtgewicht der Monomere, vorhanden ist (sind).

6. Verfahren, wie in Anspruch 5 beansprucht, in welchem das Polyvinylmonomer im Polymerisationssystem in einer Menge von 1,5 bis 50 Gewichtsprozent, bezogen auf das Gesamtgewicht der Monomere, vorhanden ist.

7. Verfahren, wie in einem der Ansprüche 1 bis 6 beansprucht, worin die vernetzten Perlen einen durchschnittlichen Durchmesser von 10 Mikrometer bis 1 Millimeter aufweisen.

8. Verwendung vernetzter Copolymerperlen, welche mittels eines Verfahrens, wie in einem der Ansprüche 1 bis 7 beansprucht, hergestellt wurden, als ein Adsorbens, einen Träger oder als ein Zwischenprodukt bei der Herstellung von Ionenaustauscherharzen.

## Revendications

1. Procédé de préparation de perles réticulées de copolymère sous forme de gel ayant une structure interne de gel et une surface poreuse, lequel procédé est caractérisé par la polymérisation en suspension d'au moins un monomère monovinylique et d'au moins un monomère polyvinylique dans un milieu aqueux contenant un inhibiteur de polymérisation hydrosoluble.

2. Procédé selon la revendication 1 dans lequel l'inhibiteur de polymérisation est ajouté au système de polymérisation selon une quantité de 0,001 à 10% en poids, calculée sur le poids total des monomères utilisés.

3. Procédé selon la revendication 2, dans lequel l'inhibiteur de polymérisation est ajouté au système de polymérisation selon une quantité de 0,01 a 5% en poids, calculée sur le poids total des monomères utilisés.

4. Procédé selon l'une quelconque des revendications 1 à 3, dans lequel l'inhibiteur de polymérisation est choisi parmi l'hydroquinone, le catéchol, le t-butyl-catéchol et le pyrogallol.

5. Procédé selon l'une quelconque des revendications 1 à 4, dans lequel le ou les monomères polyvinyliques est (sont) présent(s) dans le système de polymérisation selon une quantité de 0,5 à 60% en poids, calculée sur le poids total des monomères.

6. Procédé selon la revendication 5, dans lequel le monomère polyvinylique est présent dans le système de polymérisation selon une quantité de 1,5 à 50% en poids, calculée sur le poids total des monomères.

7. Procédé selon l'une quelconque des revendications 1 à 6, dans lequel les perles réticulées ont un diamètre moyen de 10 microns à 1 millimètre.

8. Utilisation de perles réticulées de copolymère préparées par un procédé selon l'une quelconque des revendications 1 à 7, comme adsorbant, support ou intermédiaire dans la préparation de résines échangeuses d'ions.
